# EUROPEAN PATENT SPECIFICATION

(11) **EP 4 402 880 B1**
(45) Date of publication and mention of the grant of the patent: **18.11.2026**
(21) Application number: 22812857.5
(22) Date of filing: 13.10.2022
(51) Int. Cl.: H04L 45/00, H04L 45/76

(54) **HOST ROUTING WITH VIRTUAL MACHINE MOBILITY**
HOST-ROUTING MIT MOBILITÄT EINER VIRTUELLEN MASCHINE
ROUTAGE HÔTE À MOBILITÉ DE MACHINE VIRTUELLE

(30) Priority: 21.10.2021 US 202117507289
(43) Date of publication of application: 24.07.2024
(73) Proprietor: Arista Networks, Inc., Santa Clara, CA 95054 (US)
(72) Inventor: LO, Alton, Santa Clara, CA 95054 (US); MCCLOGHRIE, Ian, Santa Clara, CA 95054 (US); BHATIA, Navdeep, Santa Clara, CA 95054 (US)
(74) Representative: Barton, Russell Glen
(86) International application number: PCT/US2022/046571
(87) International publication number: WO 2023/069300

(56) References cited:
- WO-A1-2021/169514
- US-A1- 2017 264 587
- US-A1- 2021 200 578
- ANONYMOUS: "EVPN Technical White Paper", 12 June 2017 (2017-06-12), pages 1 - 17, XP009525811, Retrieved from the Internet <URL:http://www.h3c.com/cn/d_201706/1000445_30003_0.htm#>
- HIMANSHU SHAH CIENA CORP ANOOP GHANWANI BROCADE NABIL BITAR VERIZON: "ARP Broadcast Reduction for Large Data Centers; draft-shah-armd-arp-reduction-02.txt", ARP BROADCAST REDUCTION FOR LARGE DATA CENTERS; DRAFT-SHAH-ARMD-ARP-REDUCTION-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 31 October 2011 (2011-10-31), pages 1 - 11, XP015079275

## Description

### CROSS-REFERENCE TO RELATED APPLICATIONS

### BACKGROUND

A communication system may enable devices to communicate with one another. The communication system may include devices that relay information from a sending device to a destination device.

WO 2021/169514 A1 describes advertisement and programming of routes for reaching a migrated virtual machine.

Anonymous: "EVPN Technical White Paper", H3C Technical White Paper, H3C, CN, pp. 1-17 (2017) describes the Ethernet Virtual Private Network (EVPN).

### SUMMARY

The invention is set-out in the appended claims.

### BRIEF DESCRIPTION OF DRAWINGS

Certain embodiments of the disclosure will be described with reference to the accompanying drawings. However, the accompanying drawings illustrate only certain aspects or implementations of the disclosure by way of example and are not meant to limit the scope of the claims.
FIG. 1A shows a system in accordance with one or more embodiments described herein.
FIG. IB shows a diagram of a network device in accordance with one or more embodiments disclosed herein.
FIGs. 2A-2D show flowcharts in accordance with one or more embodiments described herein.
FIGs. 3A and 3B show flowcharts in accordance with one or more embodiments described herein.
FIGs. 4A-4C show an example in accordance with one or more embodiments described herein.
FIGs. 5A and 5B show another example in accordance with one or more embodiments described herein.
FIG. 6 shows a diagram of a computing device in accordance with one or more embodiments described herein.

### DETAILED DESCRIPTION

Specific embodiments will now be described with reference to the accompanying figures.

Virtual machines (VMs) executing on servers may be connected to at least one network device (e.g., a top-of-rack (TOR) switch) configured as a virtual tunnel end point (VTEP). In a conventional Ethernet virtual private network (EVPN) integrated routing and bridging (IRB) networking scheme, all network devices are required to have network address tables (e.g., a layer 2 (L2) forwarding table) that includes: (i) the media access control (MAC) addresses of all other network devices; and (ii) the MAC addresses of all of the VMs. Requiring the network address tables to include the MAC address of all of the VMs presents scalability and VM mobility issues when the network includes thousands to hundreds of thousands of VMs.

One or more embodiments disclosed herein support VM mobility and scalability in the network by removing the requirement to program the MAC addresses of all of the VMs in the network address tables of the network devices. This advantageously reduces the necessary network device resources (e.g., hardware storage resources) required for storing large network address tables comprising hundreds of thousands of entries. This also advantageously allows VMs to be moved between network devices without requiring extensive reprogramming of the network address tables as a result of a VM move.

In particular, one or more embodiments disclosed herein provide a method for supporting VM mobility by combining features of one type of route (may also be referred to as "route type") with features of another type of route, and enabling proxy address resolution protocol (ARP) to be used for transmitting network traffic (i.e., data packets) between VMs. Methods of one or more embodiments for achieving such a combination of route features will be discussed below.

Specifically, in one or more embodiments disclosed herein, features of EVPN type-5 routes are incorporated into type-2 routes. In particular, rather than programming the MAC addresses of each of the VMs into the network address tables of the network devices, proxy ARP is used to help VMs identify other VMs (e.g., to transmit network traffic between VMs). Additionally, similar to how type-5 routes are programmed, a type-2 /32 internet protocol (IP) route (or /128 IP route) is programmed between each network device to use the MAC address of a destination network device (i.e., the network device associated with the VMs to which network traffic is intended) as an overlay destination address for the network traffic.

In one or more embodiments, the type-2 /32 IP route (or /128 IP route) enables network traffic between VMs to be routed, rather than bridged, by the network devices (as part of a layer-3 forwarding configuration where a layer-3 type network device forwards the network traffic to another network device) using the MAC addresses of the network devices rather than the MAC address of a destination VM. In particular, a VM wishing to send network traffic to another VM would transmit a broadcast ARP request that would be intercepted by the network device associated with the VM. The network device would then respond to the broadest ARP request through the use of proxy ARP.

Additionally, in one or more embodiments disclosed herein, features of type-2 routes are incorporated into type-5 routes, which by default do not require the above MAC address installation required by type-2 routes. In particular, an IP mobility extension using sequence numbers to resolve VM moves, similar to the MAC mobility header used in type-2 routes, are added to the type-5 routes. Additionally, to potentially avoid situations where a network device associated with a VM is misidentified (e.g., a situation where a VM is moved to a different network device before a network traffic transmitted by the VM is processed by any network devices), a unicast reverse path forwarding (uRPF) entry pointing to a tunnel interface (e.g., a vxlan1) to a remote network device associated with a moved VM is created when a /32 IP route is programmed on a local network device for the moved VM.

In one or more embodiments, when a network traffic is received by the local network device from another remote network device, an overlay IP source address of the network traffic is compared to the uRPF. If both entries are associated with the same tunnel interface (e.g., vxlan1), the network traffic is permitted and processed by the local network device. Alternatively, if the network traffic is associated with a local source (e.g., from a VM connected to the local network device), the input interface will be a virtual interface of the network device (e.g., a switch virtual interface (SVI) instead of the tunnel interface (e.g., vxlan1). This situation is a non-limiting example of a VM misidentification. Upon detecting the misidentification, the local network device will trigger a notification that may be used to trigger a VM mobility event.

Various embodiments of the disclosure are described below.

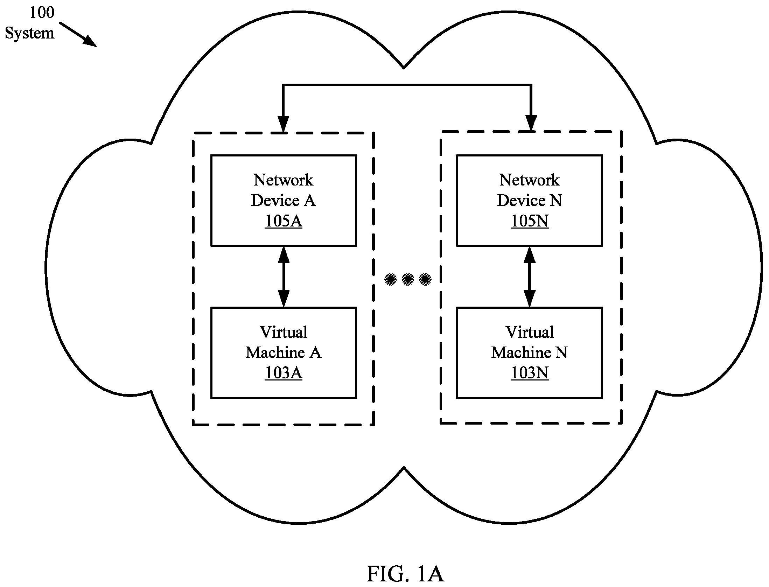

FIG. 1A shows a system (100) in accordance with one or more embodiments of the disclosure. The system (100) includes one or more virtual machines (103A, 103N) that are connected to one or more network devices (105A, 105N) within a network. Each of these components is described below.

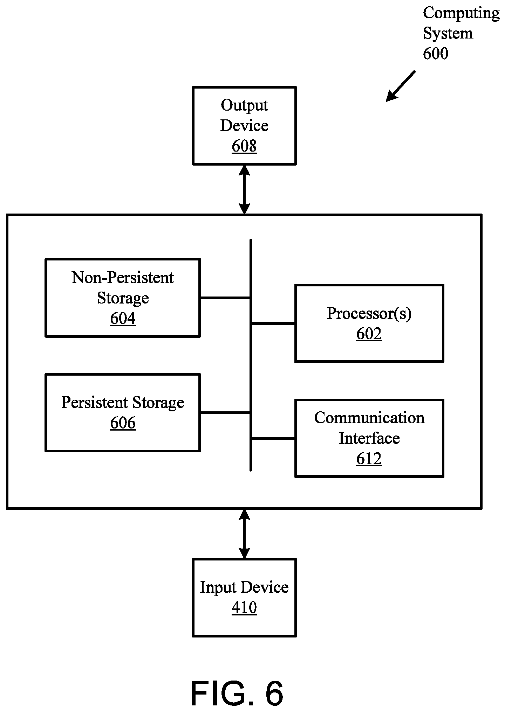

In one or more embodiments disclosed herein, each of the one or more virtual machines (103A, 103N) may be a virtual instance of a physical system (e.g., the computing system of FIG. 6) that is executing on a server (not shown). For example, each of the virtual machines (103A, 103N) may be a host executing on the server, and the system (100) may include multiple ones of the server. The server may include at least one or more processor(s), memory, and an operating system. For example, the server may be, but is not limited to, a bare metal server including physical ports that are each connected to one of the network devices (105A, 105N). In one or more embodiments, each of the virtual machines (103A, 103N) is directly (or operatively, e.g., via the network) connected to one of the network devices (105A, 105N).

In one or more embodiments disclosed herein, the one or more network device(s) (105A, 105N) are physical devices (e.g., the computing system of FIG. 6) that include persistent storage, memory (e.g., random access memory), one or more processor(s) (including a switch chip), and two or more physical ports. Examples of the network devices (105A, 105N) include, but are not limited to, a router, a switch, a top of rack (TOR) switch, and a multilayer switch. In one or more embodiments, the network devices (105A, 105N) may be directly (or operatively, e.g., via the network), connected to one another.

The switch chip is hardware that determines which egress port on a network device (105A, 105N) to forward packets (which may be in the form of media access control (MAC) frames). The switch chip may include egress and ingress ports that may connect to ports on the network device (105A, 105N). Each port may or may not be connected to another device (e.g., a server, a switch, a router, etc.). The network device (105A, 105N) may be configured to receive the packets via the ports.

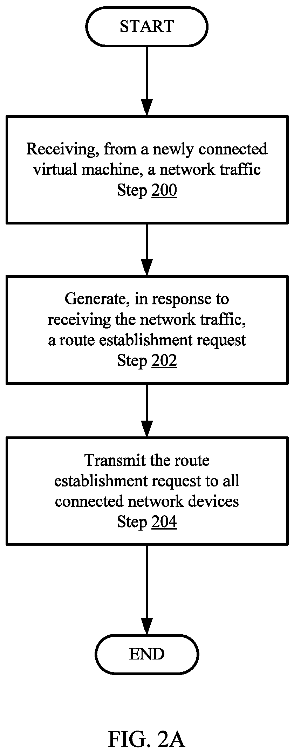

Additionally, the persistent storage in the network device may include any type of non-transitory computer readable medium that stores data. For example, the data in the persistent storage may be instructions, which, when executed by one or more processor(s) in the network device (105A, 105N), enable the network device (105A, 105N) to perform all or a portion of the functions described in accordance with one or more embodiments of the disclosure (see e.g., FIGs. 2A through 5B).

In one or more embodiments disclosed herein, the network may include other network devices (or systems) (not shown) that facilitate communication between the aforementioned components. As such, in one or more embodiments, the network may include any combination of local and/or wide area (e.g., Internet) network segments that may be wire-based and/or wireless and that may use any combination of wired and/or wireless communication protocols. Additionally, a network may refer to an entire network or any portion thereof (e.g., a logical portion of the devices within a topology of devices). A network may include a datacenter network, a wide area network, a local area network, a wireless network, a cellular phone network, or any other suitable network that facilitates the exchange of information from one part of the network to another. In one or more embodiments, the network may be coupled with or overlap, at least in part, with the Internet.

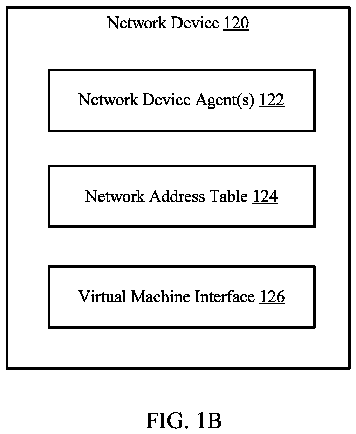

Additional details about the network devices (105A, 105N) are now described below with respect to FIG. 1B.

In particular, turning now to FIG. 1B, FIG. 1B shows a network device (120) in accordance with one or more embodiments of the disclosure. The network device (120) may be the same as any one of the network devices (105A, 105N) described above in FIG. 1A. In addition to the components discussed above in reference to FIG. 1A, the network device (120) further includes: one or more network device agents (122), a network address table (124), and a virtual machine interface (126). Each of the components illustrated in FIG. 1B is described below.

In one or more embodiments disclosed herein, the network device agent(s) (122) interacts with the other components of the network device (120). Each network device agent (122) facilitates the implementation of one or more protocols, services, and/or features of the network device (120). Examples of network device agents (120), include, but are not limited to, a bug-alerts agent, a policy agent that manages access control lists, a user interface agent, a routing information base agent, a forwarding information base agent, and a simple network management protocol (SNMP) agent. In one or more embodiments, the one or more embodiments of the network device agents (122) interact with the other components of the network device (120) to perform all or a portion of the functions described in accordance with one or more embodiments of the disclosure (see e.g., FIGs. 2A through 5B).

In one or more embodiments disclosed herein, the network address table (124) may include information regarding physical addresses (e.g., MAC addresses) of each of the virtual machines (e.g., 103A-103N, FIG. 1A) and each of the network devices (e.g., 105A-105N, FIG. 1A). For example, the network address table may be, but is not limited to, a layer-2 (L2) address forwarding table, a MAC address table, etc. In one or more embodiments, the network address table may be stored in the form of a data structure (e.g., a list, table, etc.) in persistent storage (not shown) of the network device (120). In the context of one or more embodiments disclosed herein, one of ordinary skill in the art would appreciate that the physical address of a network device and/or a virtual machine refers specifically to a MAC address of the respective component.

In one or more embodiments disclosed herein, the virtual machine interface (126) may be a virtual instance of a physical interface (e.g., a physical port) that connects the network device (120) to at least one of the one or more virtual machines. For example, the virtual machine interface (126) may be, but is not limited to, a layer-3 (L3) type switch virtual interface (SVI).

One skilled in the art will recognize that the architecture of the system (100) and of the network device (120) is not limited to the components shown in FIGs. 1A and 1B. For example, system (100) may include other devices connected to the network. Further, the network controller (120) may include components (e.g., a processor, persistent storage, etc.) not shown in FIG. 1B.

FIG. 2A shows a flowchart of a method in accordance with one or more embodiments of the disclosure. The method depicted in FIG. 2A may be performed to configure a virtual machine learn event (also referred to herein as simply a "learn event") for network devices connected on a network. The method shown in FIG. 2A may be performed by, for example, a network device (e.g., 120, FIG. 1B). Other components of the systems in FIGs. 1A-1B may perform all, or a portion, of the method of FIG. 2A without departing from the scope of this disclosure.

While FIG. 2A is illustrated as a series of steps, any of the steps may be omitted, performed in a different order, additional steps may be included, and/or any or all of the steps may be performed in a parallel and/or partially overlapping manner without departing from the disclosure.

Initially, in Step 200, the network device receives network traffic (e.g., data packets) from a virtual machine that is newly connected to the network device. In one or more embodiments, the network traffic is sent by the virtual machine to trigger a virtual machine learn event on the network device. Such a learn event allows all other network devices (e.g., 105A-105N, FIG. 1.A) connected to the network device on the network to become aware that a new virtual machine is now connected to the network device.

In one or more embodiments, the virtual machine may be an existing virtual machine that was previously connected to a different network device on the network. For example, assume a system where virtual machine A is connected to a network device A. A virtual machine move is performed and virtual machine A is now connected to network device B. The above-referenced learn event allows network device A to become aware that virtual machine A is now connected to network device B. Alternatively, the virtual machine may be a newly provisioned virtual machine.

In Step 202, in response to receiving the network traffic from the newly connected virtual machine, the network device generates a route establishment request. In one or more embodiments, the route establishment request may include instructions for causing another network device to establish a connection (e.g., in the form of a type-2 route) with the network device.

Additionally, the route establishment request includes an internet protocol (IP) address and a MAC address (i.e., the physical address) of the newly connected virtual machine and a MAC address of the network device. In one or more embodiments, the IP address may be an internet protocol version 4 (IPv4) or an internet protocol version 6 (IPv6 IP) address.

In Step 204, the network device transmits the route establishment request to all (or a portion thereof) of the other connected network devices on the network. This allows the other connected network devices to become aware that a new virtual machine is now connected to the network device. In one or more embodiments, the route establishment request may be transmitted by the network device to all the other connected network devices using border gateway protocol (BGP) techniques.

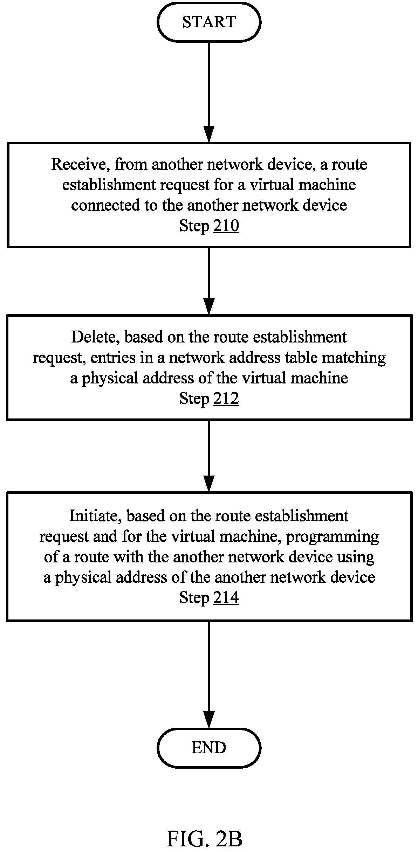

FIG. 2B shows a flowchart of a method in accordance with one or more embodiments of the disclosure. The method depicted in FIG. 2B may be performed to configure a network device to establish communication channels (e.g., routes) with a virtual machine that is newly connected to another network device. The method shown in FIG. 2B may be performed by, for example, a network device (e.g., 120, FIG. 1.B). Other components of the systems in FIGs. 1A-1B may perform all, or a portion, of the method of FIG. 2B without departing from the scope of this disclosure.

While FIG. 2B is illustrated as a series of steps, any of the steps may be omitted, performed in a different order, additional steps may be included, and/or any or all of the steps may be performed in a parallel and/or partially overlapping manner without departing from the disclosure.

In Step 210, a network device receives a route establishment request (e.g., the route establishment request transmitted in Step 204 of FIG. 2A) from another network device. In one or more embodiments, the route establishment request may be processed to configure a communication channel (e.g., a route) from the network device to a virtual machine that is connected to the another network device.

In Step 212, using the route establishment request received in Step 210, the network device deletes entries in a network address table matching a physical address of the virtual machine. In one or more embodiments, in the event the virtual machine is a previously existing virtual machine (see above description in Step 200), the network address table of the network device would include an entry (e.g., a remote address entry) having the MAC address of the virtual machine. Upon receiving the route establishment request, instead of updating this existing entry and/or creating a new entry in the network address table using the MAC address of the virtual machine, the network device removes (i.e., deletes) all MAC address in the network address table matching the MAC address of the virtual machine included in the route establishment request.

Alternatively, in one or more embodiments, in the event the virtual machine is a newly provisioned virtual machine (i.e., no existing entries in the network address table includes the MAC address of the newly provisioned virtual machine), no action will be taken by the network device to add the MAC address of the newly provisioned virtual machine into the network address table. In this example, the network device may still parse the network address table to remove (i.e., delete) any entries that conflict (i.e., match) with the MAC address of the newly provisioned virtual machine.

In Step 214, the network device initiates programming of a route (e.g., a type-2 route including a MAC address and an IP address of the virtual machine and a MAC address of a network device that transmitted the route establishment request) with the another network device using the MAC address of the another network device. In one or more embodiments, this route is programmed in response to receiving the route establishment request from the another network device, and allows the network device to transmit network traffic to the virtual machine connected to the another network device.

In one or more embodiments, in the event that the route establishment request includes an IPv4 IP address of the virtual machine, the programmed route is a /32IP route. Alternatively, in the event that the route establishment request includes an IPv6 IP address of the virtual machine, the programmed route is a /128IP route.

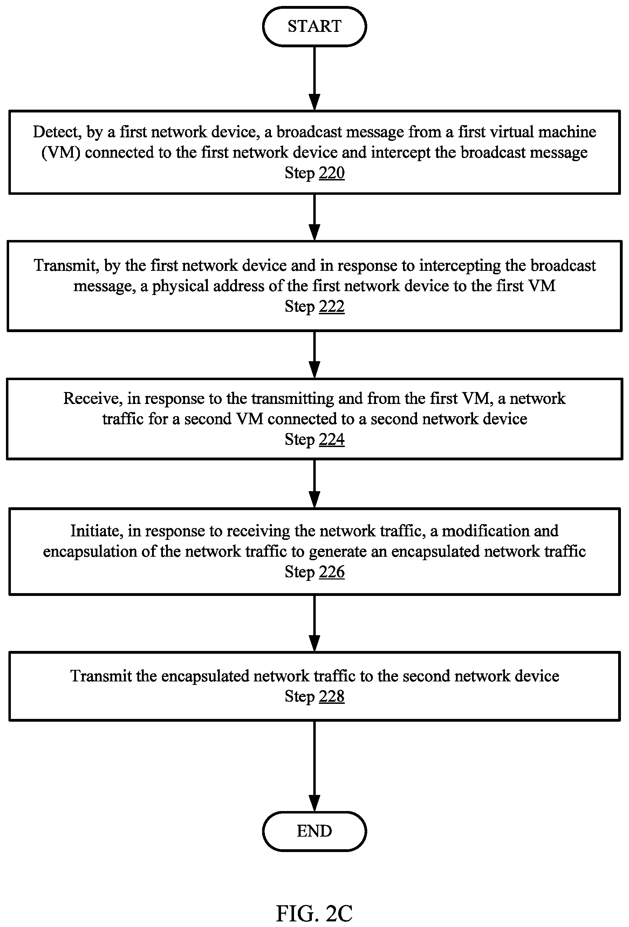

FIG. 2C shows a flowchart of a method in accordance with one or more embodiments of the disclosure. The method depicted in FIG. 2C may be performed to process transmission of network traffic from one virtual machine to another virtual machine. The method shown in FIG. 2C may be performed by, for example, a network device (e.g., 120, FIG. 1.B). Other components of the systems in FIGs. 1A-1B may perform all, or a portion, of the method of FIG. 2C without departing from the scope of this disclosure.

While FIG. 2C is illustrated as a series of steps, any of the steps may be omitted, performed in a different order, additional steps may be included, and/or any or all of the steps may be performed in a parallel and/or partially overlapping manner without departing from the disclosure.

In Step 220, a first network device among network devices connected on a network detects a broadcast message from a first virtual machine connected to the first network device. In response to detecting the broadcast message, the first network device intercepts the broadcast message. In one or more embodiments, the broadcast message may be an address resolution protocol (ARP) broadcast request that includes a request to transmit a network traffic to a second virtual machine that is connected to a second network device among the network devices.

In Step 222, in response to intercepting the broadcast message, the first network device transmits a physical address (i.e., the MAC address) of the first network device to the first virtual machine. In one or more embodiments, the network device may transmit its own physical address to the first virtual machine as a proxy ARP response in response to the first virtual machine's ARP broadcast request.

In Step 224, in response to transmitting the proxy ARP response to the first virtual machine, the first network device receives (from the first virtual machine) a network traffic to be transmitted to the second virtual machine connected to the second network device. In one or more embodiments, the network traffic may include, for example as part of a header of the network traffic, an IP address of the second virtual machine as an IP destination address for the network traffic and the MAC address of the first network device as a MAC destination address.

In Step 226, in response to receiving the network traffic from the first virtual machine, the first network device initiates a modification and encapsulation of the network traffic to generate an encapsulated network traffic. In one or more embodiments, the network traffic (namely, the header of the network traffic) is modified to rewrite the MAC address of the second network device as the MAC destination address (i.e., the MAC address of the first network device originally included in the network traffic is replaced with the MAC address of the second network device).

Additionally, in one or more embodiments, the first network device executes a routing lookup to obtain the MAC address of the second network device. In response to finding the MAC address of the second network device, the network traffic is encapsulated by adding a virtual extensible local area network (VXLAN) tunnel header to the network traffic. In this configuration of one or more embodiments, instead of bridging the network traffic to the second virtual machine using the MAC address of the second virtual machine that is conventionally programmed into a network address table of the first network device, the first network device instead routes the network traffic to the second virtual machine. This advantageously prevents the first network device (and any of the other network devices) from having to program MAC addresses of all virtual machines in the network address table. More specifically, tens of thousands of virtual machines may be connected on the network, resulting in large network address tables that take up a large amount of storage resources in the persistent storage of a network device.

In one or more embodiments, in the event that the first network device is unable to obtain the MAC address of the second network device (i.e., a learn event for the second virtual machine has not been initiated and/or completed), the first network device discards the network traffic and generates an ARP request for the second virtual machine. In one or more embodiments, the ARP request is flooded in the underlay and when the second virtual machine replies to the ARP request through the second network device, a learn event is triggered on the second network device (e.g., the learn event discussed above in the flowchart of FIG. 2A). This learn event results in the programming of the route using the MAC address of the second network device on the first network device, which now enables network traffic to be routed from the first network device to the second virtual machine. In one or more embodiments, after the first network device discards the network traffic, the first virtual machine may retransmit the network traffic to the first network device in response to a request from the first network device.

In Step 228, the first network device transmits the encapsulated network traffic to the second network device. In one or more embodiments, the encapsulated network traffic may be transmitted through the underlay network.

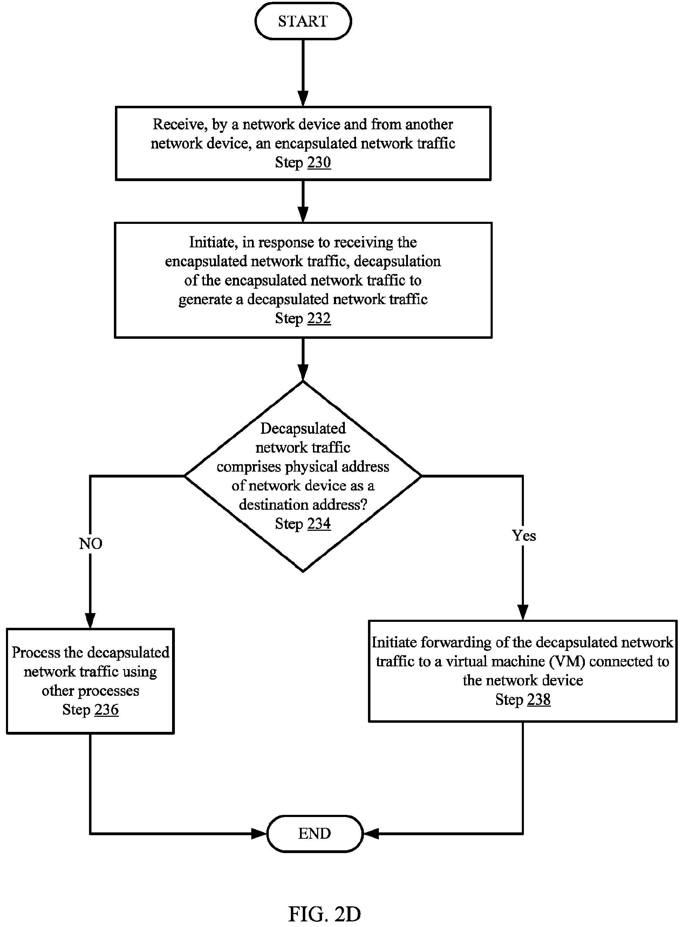

FIG. 2D shows a flowchart of a method in accordance with one or more embodiments of the disclosure. The method depicted in FIG. 2D may be performed to process an encapsulated network traffic. The method shown in FIG. 2D may be performed by, for example, a network device (e.g., 120, FIG. 1.B). Other components of the systems in FIGs. 1A-1B may perform all, or a portion, of the method of FIG. 2D without departing from the scope of this disclosure.

While FIG. 2D is illustrated as a series of steps, any of the steps may be omitted, performed in a different order, additional steps may be included, and/or any or all of the steps may be performed in a parallel and/or partially overlapping manner without departing from the disclosure.

In Step 230, a network device receives an encapsulated network traffic (e.g., the encapsulated traffic transmitted in Step 228 of FIG. 2C) from another network device. In response to receiving the encapsulated network traffic, the network device (in Step 232) initiates decapsulation of the encapsulated traffic to generate a decapsulated network traffic. In one or more embodiments, the network device may decapsulate the encapsulated network traffic by stripping (i.e., removing) a VXLAN tunnel header (e.g., the VXLAN tunnel header appended in Step 226 of FIG. 2C) of the encapsulated network traffic.

In Step 234, the network device determines whether the decapsulated network traffic comprises its own MAC address as a MAC destination address. In response to determining that the decapsulated network traffic includes the network device's MAC address as the MAC destination address (i.e., YES in Step 234), the network device initiates (in Step 238) forwarding of the decapsulated network traffic to a virtual machine connected to the network device (e.g., using a local link using the MAC address of the virtual machine as a destination address for the decapsulated network traffic). For example, (in Step 238), the network device may rewrite the existing destination MAC address in the decapsulated network traffic to that of the virtual machine connected to the network device.

Alternatively, in one or more embodiments, in response to determining that the decapsulated network traffic does not include the network device's MAC address as the MAC destination address (i.e., NO in Step 234), the network device processes (in Step 236) the decapsulated network traffic using other processes. For example, in one or more embodiments, the network device may discard (e.g., drop) the decapsulated network traffic. As another example, the network device may perform a routing lookup using the MAC destination address included in the decapsulated network traffic and re-encapsulate and route the network traffic to another network device having a MAC destination address that matches the MAC destination address included in the decapsulated network traffic.

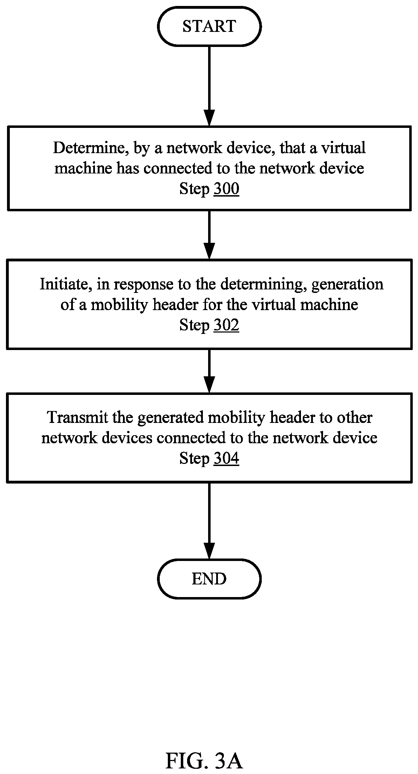

FIG. 3A shows a flowchart of a method in accordance with one or more embodiments of the disclosure. The method depicted in FIG. 3A may be performed to configure a virtual machine learn event for systems (e.g., 100, FIG. 1A) employing type-5 EVPN route advertisement mechanisms. The method shown in FIG. 3A may be performed by, for example, a network device (e.g., 120, FIG. 1.B). Other components of the systems in FIGs. 1A-1B may perform all, or a portion, of the method of FIG. 3A without departing from the scope of this disclosure.

While FIG. 3A is illustrated as a series of steps, any of the steps may be omitted, performed in a different order, additional steps may be included, and/or any or all of the steps may be performed in a parallel and/or partially overlapping manner without departing from the disclosure.

In Step 300, a network device among inter-connected network devices on a network determines that a virtual machine has connected to the network device. In one or more embodiments, the network device may determine that a virtual machine has connected to the network device through receiving network traffic from the virtual machine. For example, similar to Step 200 in FIG. 2A, the network traffic from the virtual machine may trigger a learn event on the network device.

In Step 302, in response to determining that a virtual machine has connected to the network device, the network device initiates generation of a mobility header for the virtual machine. In one or more embodiments, the mobility header may be similar to MAC mobility headers used in type-2 EVPN route communication mechanisms. For example, the mobility headers may be an IP mobility header including sequence numbers used for resolving virtual machine moves in the network. In one or more embodiments, the sequence numbers may have, but are not limited to, a format including a 32-bit unsigned integer starting with a value of 1, incrementing monotonically as the network device moves around the network.

In Step 304, the generated mobility header is transmitted, by the network device, to all other network devices connected on the network. In one or more embodiments, the mobility header may be transmitted as a new EVPN IP mobility extended community associated with border gateway protocol (BGP) routes.

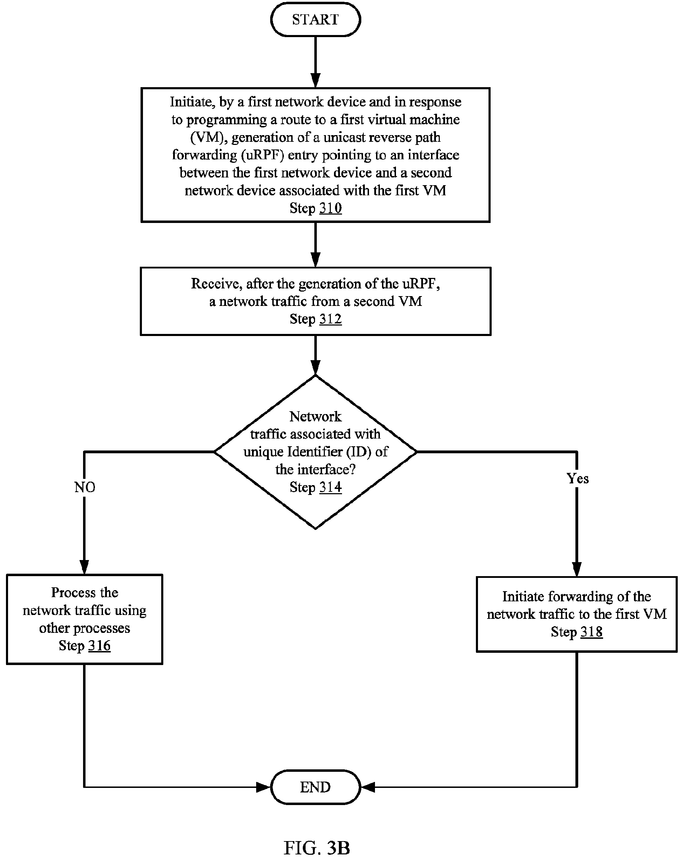

FIG. 3B shows a flowchart of a method in accordance with one or more embodiments of the disclosure. The method depicted in FIG. 3B may be performed to configure a process for avoiding one or more situations where a network device associated with a virtual machine is misidentified as a result of a learn event not yet being executed after a virtual machine move event. The method shown in FIG. 3B may be performed by, for example, a network device (e.g., 120, FIG. 1.B). Other components of the systems in FIGs. 1A-1B may perform all, or a portion, of the method of FIG. 3B without departing from the scope of this disclosure.

While FIG. 3B is illustrated as a series of steps, any of the steps may be omitted, performed in a different order, additional steps may be included, and/or any or all of the steps may be performed in a parallel and/or partially overlapping manner without departing from the disclosure.

In Step 310, a first network device initiates generation of a unicast reverse path forwarding (uRPF) entry pointing to an interface (e.g., a tunnel interface) between the first network device and a second network device. In one or more embodiments, the interface may be associated with a first virtual machine connected to the first network device such that a route from the second network device to the first virtual machine may be programmed. Additionally, the generation of the uRPF entry may be in response to a start of a programming of the route to the first virtual machine from the second network device.

In Step 312, after generation of the uRPF, the first network device receives network traffic from a second virtual machine on the network; the network traffic is to be transmitted to the first virtual machine. The first network device receives the network traffic from the second virtual machine and (in Step 314) determines whether the network traffic is associated with a unique identifier (ID) of the interface associated with the first virtual machine. In one or more embodiments, the first network device may look up the unique ID in a uRPF address table stored in the first network device using a source address included in a header of the network traffic.

Additionally, in one or more embodiments, the second virtual machine may initially be connected to the second network device but subsequently moved (e.g., via a virtual machine move) to instead be connected to the first network device prior to transmitting the network traffic for the first virtual machine.

In one or more embodiments, if it is determined that the network traffic includes the unique ID of the interface (i.e., YES in Step 314), the first network device initiates forwarding of the network traffic to the first virtual machine (e.g., using a local link with the first virtual machine).

Alternatively, if it is determined that the network traffic does not include the unique ID of the interface (i.e., NO in Step 316), the first network device processes the network traffic using other processes. For example, if it is determined that the network traffic is associated with a local source (e.g., from a virtual machine connected to the first network device in a situation where the second virtual machine moved from the second network device to the first network device prior to the transmission of the network traffic and before the first network device could learn about this virtual machine move), the network traffic may be discarded (i.e., dropped). Alternatively, the network traffic may not be deleted and used for learn processing (by a processor of the network device and/or a user/administrator of the network device) to prevent similar situations from occurring in the future.

In one or more embodiments, the input interface where the network traffic is received from the second virtual machine may be a virtual machine interface (e.g., 126, FIG. 1B) of the first network device (e.g., a switch virtual interface (SVI) instead of the tunnel interface. This situation presents a non-limiting example of a virtual machine misidentification after a virtual machine move has occurred and before a learn event is executed in response to the move. Upon detecting the virtual machine misidentification, the first network device may trigger a notification that triggers a virtual machine mobility event such that the first network device can initiate a learn event for the second virtual machine.

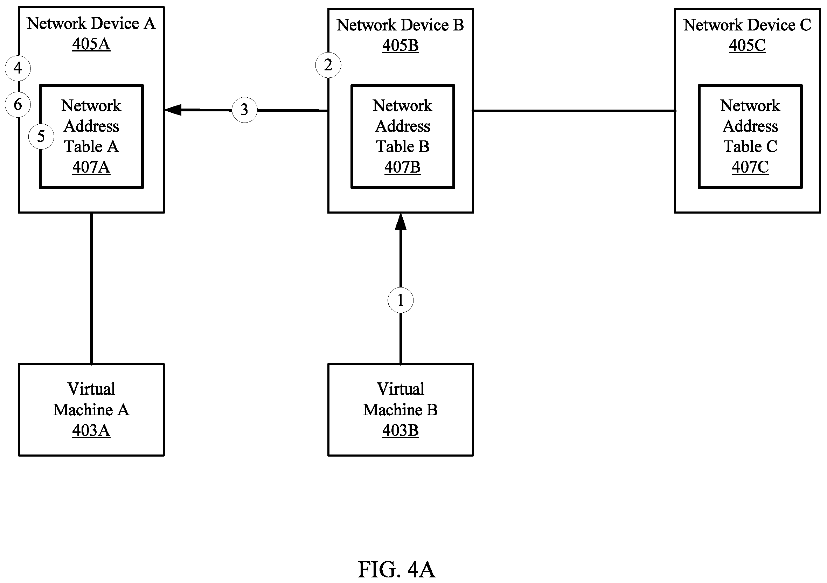

To further clarify embodiments of the disclosure, a non-limiting working example is provided in FIGs. 4A-4C. Specifically, FIGs. 4A-4C show a non-limiting working example of the method discussed above in reference to FIGs. 2A-2D.

### Start of Example

In FIG. 4A, a virtual machine B (VM B) (403B) transmits a packet triggering a learn event to network device B (405B) [1]. Network device B (405B), in response to receiving the packet, generates a packet including a type-2 route with an IP and MAC address of VM B (403B) and stores VM B's MAC address in its network address table B (407B) [2]. The generated packet is transmitted to network device A (405A) [3]. Network device A (405A) receives the packet with the type-2 route from network device B (405B) [4]. Subsequently, network device A (405A) deletes all entries in its network address table A (407A) matching the MAC address of VM B (403B) [5]. Network device A (405A) also programs a /32 IP route using a MAC address of network device B (405B) [6].

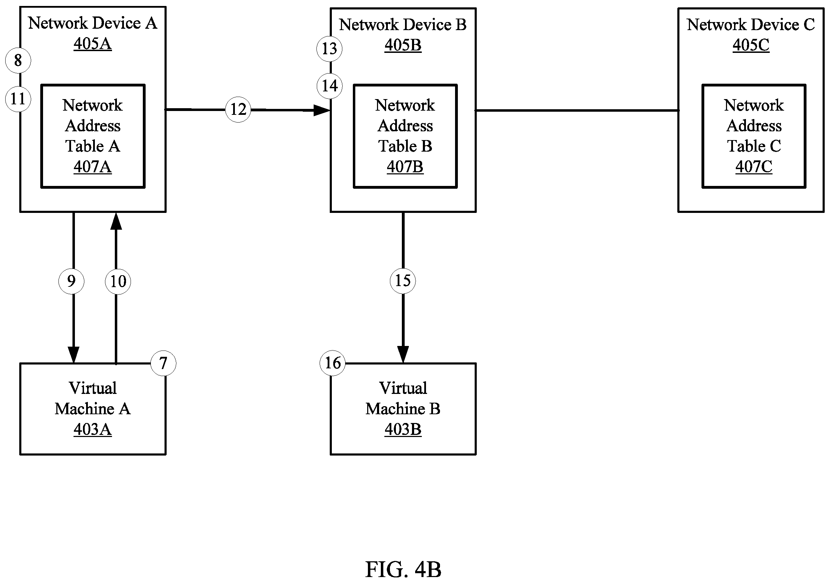

Turning to FIG. 4B, at some point in time after the /32 IP route is programmed in network device A (405A), virtual machine A (VM A) (403A) transmits an address resolution protocol (ARP) request including the IP address of VM B to a broadcast MAC address [7]. Network device A (405A) detects the ARP request and intercepts the ARP request [8]. After intercepting the ARP request, network device A (405A) replies to VM A with its own MAC address [9]. VM A, in response to receiving the response from network device A (405A) transmits a network traffic (e.g., data packet) including VM B's IP address as an IP destination address and network device A's (405A) MAC address as a MAC destination address to network device A (405A) [10].

Additionally, network device A (405A) receives the network traffic and modifies the MAC destination address to the MAC address of network device B (405B) and encapsulates the network traffic by adding a VXLAN tunnel header [11]. The encapsulated network traffic is transmitted to network device B (405B) [12]. Network device B (450B) receives the encapsulated traffic and decapsulates the encapsulated network traffic [13]. Network device B (405B) determines that the MAC destination address in the decapsulated network traffic matches its own MAC address and looks up VM B's IP address in its network address table [14]. As a result of the matching, network device B (405B) forwards the decapsulated network traffic to VM B (403B) [15]. VM B receives the decapsulated network traffic and processes the decapsulated network traffic [16].

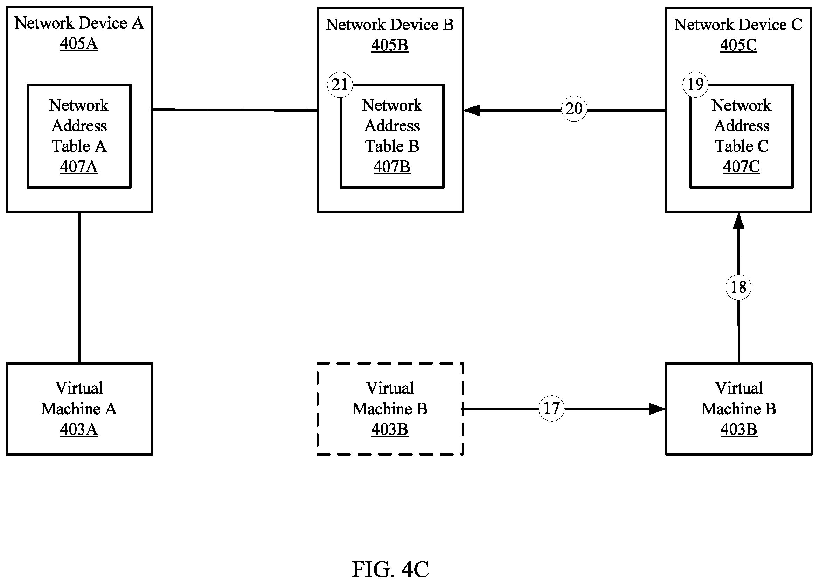

Turning now to FIG. 4C, at any point in time after the events of FIG. 4B, VM B (403B) is moved to be connected with network device C (405C) [17]. Upon connecting to network device C (405C), VM B (403B) transmits a packet triggering a learn event to network device C (405C) [18]. Network device C adds VM B's MAC address to its network address table C (407C) [19], and transmits the route establishment request (e.g., the route establishment request discussed above in FIG. 4A) to network device B (405B) [20]. Network device B (405B) receives the route establishment request, deletes VM B's MAC address from its network address table B (407B), and programs the /32 IP route [21].

### End of Example

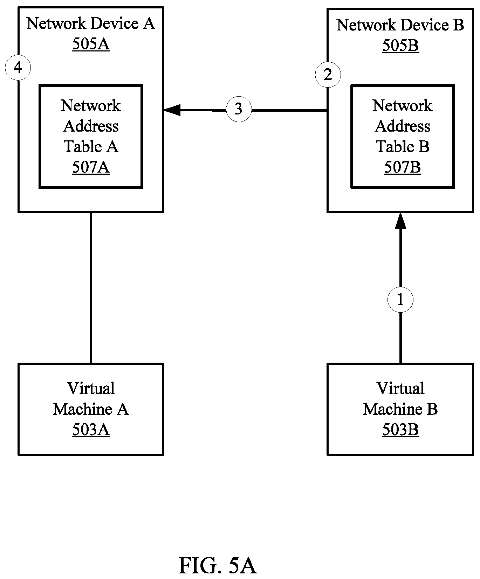

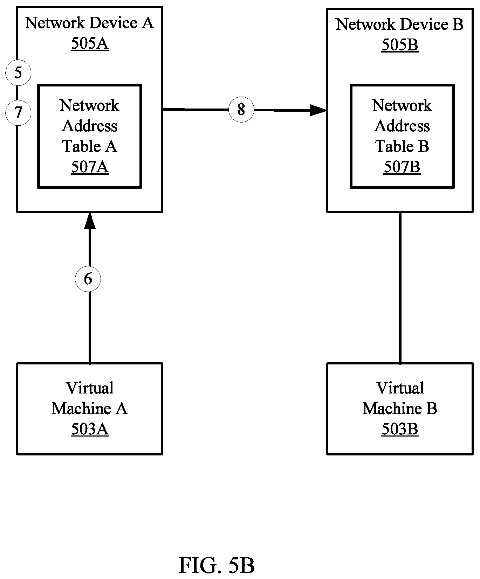

To further clarify embodiments of the disclosure, another non-limiting working example is provided in FIGs. 5A and 5B. Specifically, FIGs. 5A and 5B show a non-limiting working example of the method discussed above in reference to FIGs. 3A and 3B.

### Start of Example

In FIG. 5A, virtual machine B (VM B) (503B) transmits a packet triggering a learn event to network device B (505B) [1]. Network device B (505B) generates a routing update including a type-5 route with an IP mobility header [2]. The routing update including the type-5 route and the IP mobility header are transmitted to network device A (505A) to notify network device A of the new VM B (503B) connection with network device B (505B) [3]. Network device A (505A) receives the packet, programs the type-5 route, and stores the IP mobility header [4].

Turning now to FIG. 5B, at some point in time after network device A (505A) programs the type-5 route, network device A (505A) generates a unicast reverse path forwarding (RPF) entry pointing to an interface (e.g., a tunnel interface) between itself and network device B (505B) [5]. Subsequently, VM A (503A) transmits to network device A (505A) a network traffic (i.e., data packet) to be transmitted to VM B (503B) [6]. Network device A (505A) receives the network traffic and determines whether the network traffic includes information identifying the interface between network device A (505A) to network device B (505B) [7]. Network device A (507A) determines there is information in the network traffic identifying the interface and forwards the network traffic to network device B (505B) to be subsequently forwarded to VM B (503B) [8].

### End of Example

As discussed above, embodiments disclosed herein may be implemented using computing devices. FIG. 6 shows a diagram of a computing device in accordance with one or more embodiments disclosed herein. Computing device (600) may include one or more computer processors (602), non-persistent storage (604) (e.g., volatile memory, such as random access memory (RAM), cache memory), persistent storage (606) (e.g., a hard disk, an optical drive such as a compact disk (CD) drive or digital versatile disk (DVD) drive, a flash memory, etc.), communication interface (612) (e.g., Bluetooth interface, infrared interface, network interface, optical interface, etc.), input devices (610), output devices (608), and numerous other elements (not shown) and functionalities. Each of these components is described below.

In one embodiment disclosed herein, computer processor(s) (602) may be an integrated circuit for processing instructions. For example, the computer processor(s) may be one or more cores or micro-cores of a processor. Computing device (600) may also include one or more input devices (610), such as a touchscreen, keyboard, mouse, microphone, touchpad, electronic pen, or any other type of input device. Further, communication interface (612) may include an integrated circuit for connecting computing device (600) to a network (not shown) (e.g., a local area network (LAN), a wide area network (WAN) such as the Internet, mobile network, or any other type of network) and/or to another device, such as another computing device.

In one embodiment disclosed herein, computing device (600) may include one or more output devices (608), such as a screen (e.g., a liquid crystal display (LCD), a plasma display, touchscreen, cathode ray tube (CRT) monitor, projector, or other display device), a printer, external storage, or any other output device. One or more of the output devices may be the same or different from the input device(s). The input and output device(s) may be locally or remotely connected to computer processor(s) (602), non-persistent storage (604), and persistent storage (606). Many different types of computing devices exist, and the aforementioned input and output device(s) may take other forms.

As shown above, specific embodiments have been described with reference to the accompanying figures. In the above description, numerous details are set forth as examples. It will be understood by those skilled in the art, and having the benefit of this Detailed Description, that one or more embodiments described herein may be practiced without these specific details and that numerous variations or modifications may be possible without departing from the scope of the embodiments. Certain details known to those of ordinary skill in the art may be omitted to avoid obscuring the description.

Throughout the application, ordinal numbers (e.g., first, second, third, etc.) may be used as an adjective for an element (*i.e.,* any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

As used herein, the phrase operatively connected, or operative connection, means that there exists between elements/components/devices a direct or indirect connection that allows the elements to interact with one another in some way. For example, the phrase 'operatively connected' may refer to any direct (e.g., wired directly between two devices or components) or indirect (e.g., wired and/or wireless connections between any number of devices or components connecting the operatively connected devices) connection. Thus, any path through which information may travel may be considered an operative connection.

In accordance with an embodiment, a method for supporting virtual machine (VM) mobility between network devices connected to a network, the method being executed by a first network device among the network devices that is connected to a first VM executing on a first server and is provided that includes receiving, from a second network device among the network devices that is connected to a second VM executing on a second server, a route establishment request includes an internet protocol (IP) address and a media access control (MAC) address of the second VM, initiating, in response to receiving the route establishment request, programming of a connection between the second VM to the first VM, the programming of the connection between the second VM to the first VM includes removing, from a network address table stored by the first network device, all entries matching the MAC address of the second VM and initiating programming of a route for the second VM using a MAC address of the second network device, intercepting, after the programming of the connection between the second VM to the first VM, a broadcast request transmitted by the first VM, transmitting, in response to the intercepting, a MAC address of the first network device to the first VM, receiving from the first VM, in response to transmitting the MAC address of the first network device to the first VM, network traffic includes an IP address of the second VM as an IP destination address and the MAC address of the first network device as a MAC destination address, initiating, in response to receiving the network traffic, execution of a routing lookup to rewrite the MAC destination address of the first network device to the MAC address of the second network device and encapsulate the network traffic with a tunnel header to generate first encapsulated network traffic and transmitting, in response to generating the first encapsulated network traffic, the first encapsulated network traffic to the second network device.

In accordance with another embodiment, the broadcast request is an address resolution protocol (ARP) broadcast request that includes a request to transmit the network traffic to the second VM, the transmitting of the MAC address of the first network device to the first VM is a proxy ARP response transmitted in response to the request by the first VM to transmit the network traffic to the second VM, the route establishment request is a request for establishing a type-2 route between the first VM and the second VM through the first network device and the second network device, and the route for the second VM using the MAC address of the second network device is a /32 IP route or a /128 IP route.

In accordance with another embodiment, the method includes receiving, from the second network device, second encapsulated network traffic, decapsulating the second encapsulated network traffic to obtain decapsulated network traffic, determining, using the decapsulated network traffic, that the MAC destination address included in the decapsulated network traffic matches the MAC address of the first network device and initiating, based on the determining, forwarding of the decapsulated network traffic to the first VM using the MAC address of the first VM as a destination address for the decapsulated network traffic.

In accordance with another embodiment, the method includes receiving an update from a third network device among the network devices that the first VM is now connected to the third network device instead of the first network device and deleting, in response to receiving the update, the MAC address of the first VM from the network address table without subsequently adding the MAC address of the first VM as a remote address in the network address table.

In accordance with an embodiment, a method for supporting virtual machine (VM) mobility between network devices connected to a network, the method being executed by a first network device among the network devices that is connected to a first VM executing on a first server and is provided that includes receiving, from a second network device among the network devices that is connected to a second VM executing on a second server, a route establishment request that includes a physical address of the second VM, in response to receiving the route establishment request removing, from a network address table stored by the first network device, entries matching the physical address of the second VM and programming a route between the first VM and the second VM using a physical address of the second network device and transmitting, after programming the route, network traffic from the first VM to the second network device without using the physical address of the second VM.

In accordance with another embodiment, the network traffic from the first VM to the second network device includes an internet protocol (IP) address of the second VM and a physical address of the first network device.

In accordance with another embodiment, the route establishment request includes a request for establishing a type-2 route between the first VM and the second VM through the first network device and the second network device, and the route programmed between the first VM and the second VM using the physical address of the second network device is a /32 internet protocol (IP) route or a /128 IP route.

In accordance with another embodiment, the route establishment request is a border gateway protocol (BGP) message includes the type-2 route.

In accordance with another embodiment, the method includes receiving an update from a third network device among the network devices that the first VM is now connected to the third network device instead of the first network device and deleting, in response to receiving the update, a physical address of the first VM from the network address table without subsequently adding the physical address of the first VM as a remote address in the network address table.

In accordance with another embodiment, transmitting the network traffic from the first VM to the second network device without using the physical address of the second VM includes transmitting the network traffic by the first network device using a routing process instead of a bridging process.

In accordance with another embodiment, the routing process is proxy address resolution protocol (ARP).

In accordance with another embodiment, transmitting the network traffic by the first network device includes intercepting a broadcast request transmitted from the first VM, transmitting, in response to the intercepting, a physical address of the first network device to the first VM and receiving, in response to transmitting the physical address of the first network device to the first VM, the network traffic from the first VM, the network traffic includes the physical address of the first network device and does not include the physical address of the second VM.

In accordance with another embodiment, the physical address of the first network device included in the network traffic is set as a destination physical address of the network traffic, and the network traffic includes an internet protocol (IP) address of the second VM to identify the second VM as a destination target of the network traffic.

In accordance with another embodiment, transmitting the network traffic by the first network device using includes rewriting, upon receiving the network traffic from the first VM, the physical address of the first network device in the network traffic to a physical address of the second network device, encapsulating the network traffic with a tunnel header to generate encapsulated network traffic and transmitting, based on the physical address of the second network device included in the network traffic, the encapsulated network traffic to the second network device.

In accordance with another embodiment, the method includes receiving, from the second network device, encapsulated network traffic, decapsulating the encapsulated network traffic to obtain decapsulated network traffic, determining that the decapsulated network traffic includes a physical address that matches a physical address of the first network device, initiating, based on the determining, a forwarding of the decapsulated network traffic to the first VM using the physical address of the first VM.

In accordance with an embodiment, a method is provided that includes selecting a first type of route for supporting virtual machine (VM) mobility between network devices connected to a network and adding a feature of a second type of route to the first type of route to enable the network devices to execute proxy address resolution protocol (ARP) for transmitting network traffic between the VMs without requiring each of the network devices to store a physical address of each of the VMs in respective ones of a network address table.

In accordance with another embodiment, the first type of route is a type-2 route, the second type of route is a type-5 route, the feature of the type-5 route added to the type-2 route is a layer-3 forwarding configuration associated with the type-2 route.

In accordance with another embodiment, the feature of the type-5 route added to the type-2 route eliminates the programming of the physical address of each of the VMs in the respective ones of the network address when a network device among the network devices learns about one or more of the VMs from another one of the network devices.

In accordance with another embodiment, the first type of route is a type-5 route, the second type of route is a type-2 route, and the feature of the type-2 route added to the type-5 route is a mobility header using sequence numbers to resolve VM moves between the network devices.

In accordance with another embodiment, the type-5 route is further modified to includes a unicast reverse path forwarding (uRPF) feature used to prevent misidentification of a connection between the VMs and corresponding ones of the network devices.

While embodiments described herein have been described with respect to a limited number of embodiments, those skilled in the art, having the benefit of this Detailed Description, will appreciate that other embodiments can be devised which do not depart from the scope of embodiments as disclosed herein. Accordingly, the scope of embodiments described herein should be limited only by the attached claims.

## Claims

1. A method for supporting virtual machine , VM, mobility between network devices (105, 120, 405) connected to a network, the method being executed by a first network device (120, 405A) among the network devices (105, 120, 405) that is connected to a first VM (103, 403A) executing on a first server and comprising:
receiving (210), from a second network device (120, 405B) among the network devices (105, 120, 405) that is connected to a second VM (103, 403B) executing on a second server, a route establishment request that comprises a physical address of the second VM (103, 403B);
in response to receiving the route establishment request:
removing (212), from a network address table (124, 407A) stored by the first network device (120, 405A), one or more entries matching the physical address of the second VM (103, 403B); and
programming (214) a route between the first VM (103, 403A) and the second VM (103, 403B) using a physical address of the second network device (120, 405B); and
transmitting, after programming the route, network traffic from the first VM (103, 403A) to the second network device (120, 405B) without using the physical address of the second VM (103, 403B).

2. The method of claim 1, wherein the network traffic, when received from the first VM (103, 403A), comprises an internet protocol , IP, address of the second VM (103, 403A) and a physical address of the first network device (120, 405A).

3. The method of claim 1 or claim 2, wherein
the route establishment request comprises a request for establishing a type-2 route between the first VM (103, 403A) and the second VM (103, 403B) through the first network device (120, 405A) and the second network device (120, 405B), and
the route programmed between the first VM (103, 403A) and the second VM (103, 403B) using the physical address of the second network device (120, 405B) is a /32 internet protocol , IP, route or a /128 IP route.

4. The method of claim 3, wherein the route establishment request is a border gateway protocol , BGP, message comprising the type-2 route.

5. The method of any preceding claim, wherein the method further comprises:
receiving an update from a third network device among the network devices (105, 120, 405) that the first VM (103, 403A) is now connected to the third network device instead of the first network device (120, 405A); and
deleting, in response to receiving the update, a physical address of the first VM (103, 403A) from the network address table (124, 407A) without subsequently adding the physical address of the first VM (103, 403A) as a remote address in the network address table (124, 407A).

6. The method of any preceding claim, wherein transmitting the network traffic from the first VM (103, 403A) to the second network device (120, 405B) without using the physical address of the second VM (103, 403A) comprises transmitting the network traffic by the first network device (120, 405A) using a routing process instead of a bridging process.

7. The method of claim 6, wherein the routing process is proxy address resolution protocol , ARP .

8. The method of any preceding claim, wherein transmitting the network traffic comprises:
intercepting (220) a broadcast request transmitted from the first VM (103, 403A);
transmitting (222), in response to the intercepting, a physical address of the first network device (120, 405A) to the first VM (103, 403A); and
receiving (224), in response to transmitting the physical address of the first network device (120, 405A) to the first VM (103, 403A), the network traffic from the first VM (103, 403A), wherein the network traffic comprises the physical address of the first network device (120, 405A) and does not include the physical address of the second VM (103, 403B).

9. The method of claim 8, wherein
the physical address of the first network device (120, 405A) included in the network traffic is set as a destination physical address of the network traffic, and
the network traffic includes an internet protocol (IP) address of the second VM (103, 403B) to identify the second VM (103, 403B) as a destination target of the network traffic.

10. The method of claim 8, wherein transmitting the network traffic further comprises:
rewriting (226), upon receiving the network traffic from the first VM (103, 403A), the physical address of the first network device (120, 405A) in the network traffic to a physical address of the second network device (120, 405B);
encapsulating (226) the network traffic with a tunnel header to generate encapsulated network traffic; and
transmitting (228), based on the physical address of the second network device (120, 405B) included in the network traffic, the encapsulated network traffic to the second network device (120, 405B).

11. The method of any of claims 1-9, further comprising:
receiving (230), from the second network device (120, 405B), encapsulated network traffic;
decapsulating (232) the encapsulated network traffic to obtain decapsulated network traffic;
determining (234) that the decapsulated network traffic includes a physical address that matches a physical address of the first network device (120, 405A);
initiating (238), based on the determining, a forwarding of the decapsulated network traffic to the first VM (103, 403A) using the physical address of the first VM (103, 403A).

12. A network device (105, 120, 405A, 600) comprising:
storage and memory (604, 606);
one or more processors (602) configured, based at least in part on the storage and the memory (604, 606), to:
receive (210), from an additional network device (120, 405B), a route establishment request that comprises a physical address of a virtual machine , VM, (103, 403B);
remove (212), based on the received route establishment request, any entries matching the physical address of the VM (103, 403B) from a network address table (124, 407A) stored by the network device (120, 405A);
program (214), based on the received route establishment request, a route for the VM (103, 403B) using a physical address of the additional network device (120, 405B); and
transmit, based on the programmed route, network traffic intended for the VM (103, 403B) to the additional network device (120, 405B) without using the physical address of the VM (103, 403B).

13. The network device of claim 12, wherein the one or more processors (602) are configured to receive the network traffic, the received network traffic comprising an internet protocol (IP) address of the VM (103, 403B) and a physical address of the network device (120, 405A).

14. The network device of claim 12 or claim 13, wherein the route establishment request comprises a request for establishing a type-2 route to the VM (103, 403B) through the additional network device (120, 405B).

15. The network device of any of claims 12-14, wherein the programmed route for the VM (103, 403B) using the physical address of the additional network device (120, 405B) is a /32 internet protocol , IP, route or a /128 IP route.

## Patentansprüche

1. Verfahren zur Unterstützung der Mobilität einer virtuellen Maschine (VM) zwischen Netzwerkgeräten (105, 120, 405), die mit einem Netzwerk verbunden sind, wobei das Verfahren durchgeführt wird von einem ersten Netzwerkgerät (120, 405A) der Netzwerkgeräte (105, 120, 405), das mit einer ersten VM (103, 403A) verbunden ist, die auf einem ersten Server ausgeführt wird, das Verfahren umfassend:
Empfangen (210) einer Routenerstellungsanforderung, die eine physikalische Adresse der zweiten VM enthält, von einem zweiten Netzwerkgerät (120, 405B) der Netzwerkgeräte (105, 120, 405), das mit der zweiten VM (103, 403B) verbunden ist, die auf einem zweiten Server ausgeführt wird;
in Reaktion auf den Empfang der Routenerstellungsanforderung:
Entfernen (212) eines oder mehrerer Einträge, die mit der physikalischen Adresse der zweiten VM (103, 403B) übereinstimmen, aus einer Netzwerkadressentabelle (124, 407A), die von dem ersten Netzwerkgerät (120, 405A) gespeichert wurde; und
Programmieren (214) einer Route zwischen der ersten VM (103, 403A) und der zweiten VM (103, 403B) unter Verwendung einer physikalischen Adresse des zweiten Netzwerkgeräts (120, 405B); und
nach dem Programmieren der Route Übertragen von Netzwerkverkehr von der ersten VM (103, 403A) zu dem zweiten Netzwerkgerät (120, 405B) ohne Verwendung der physikalischen Adresse der zweiten VM (103, 403B).

2. Verfahren nach Anspruch 1, wobei der Netzwerkverkehr, wenn er von der ersten VM (103, 403A) empfangen wird, eine Internetprotokolladresse (IP-Adresse) der zweiten VM (103, 403A) und eine physikalische Adresse des ersten Netzwerkgeräts (120, 405A) umfasst.

3. Verfahren nach Anspruch 1 oder Anspruch 2, wobei
die Routenerstellungsanforderung eine Anforderung zum Erstellen einer Typ-2-Route zwischen der ersten VM (103, 403A) und der zweiten VM (103, 403B) über das erste Netzwerkgerät (120, 405A) und das zweite Netzwerkgerät (120, 405B) umfasst, und
die unter Verwendung der physikalischen Adresse des zweiten Netzwerkgeräts (120, 405B) zwischen der ersten VM (103, 403A) und der zweiten VM (103, 403B) programmierte Route eine /32-Internetprotokoll-Route (IP-Route) oder eine /128-IP-Route ist.

4. Verfahren nach Anspruch 3, wobei
die Routenerstellungsanforderung eine Border Gateway Protocol-Nachricht (BGP-Nachricht) ist, die die Typ-2-Route umfasst.

5. Verfahren nach einem der vorangehenden Ansprüche, wobei das Verfahren ferner umfasst:
Empfangen einer Aktualisierung von einem dritten Netzwerkgerät der Netzwerkgeräte (105, 120, 405), dass die erste VM (103, 403A) anstelle des ersten Netzwerkgeräts (120, 405A) nun mit dem dritten Netzwerkgerät verbunden ist; und
als Reaktion auf den Empfang der Aktualisierung das Löschen einer physikalischen Adresse der ersten VM (103, 403A) aus der Netzwerkadressentabelle (124, 407A), ohne die physikalische Adresse der ersten VM (103, 403A) anschließend als Remote-Adresse in der Netzwerkadressentabelle (124, 407A) hinzuzufügen.

6. Verfahren nach einem der vorangehenden Ansprüche, wobei das Übertragen des Netzwerkverkehrs von der ersten VM (103, 403A) an das zweite Netzwerkgerät (120, 405B) ohne Verwendung der physikalischen Adresse der zweiten VM (103, 403A) das Übertragen des Netzwerkverkehrs durch das erste Netzwerkgerät (120, 405A) unter Verwendung eines Routing-Prozesses anstelle eines Bridging-Prozesses umfasst.

7. Verfahren nach Anspruch 6, wobei der Routing-Prozess das Proxy Address Resolution Protocol (ARP) ist.

8. Verfahren nach einem der vorangehenden Ansprüche, wobei das Senden des Netzwerkverkehrs umfasst:
Abfangen (220) einer von der ersten VM (103, 403A) gesendeten Broadcast-Anfrage;
als Reaktion auf das Abfangen das Senden (222) einer physikalischen Adresse des ersten Netzwerkgeräts (120, 405A) an die erste VM (103, 403A); und
als Reaktion auf das Senden der physikalischen Adresse des ersten Netzwerkgeräts (120, 405A) an die erste VM (103, 403A) das Empfangen des Netzwerkverkehr von der ersten VM (103, 403A), wobei der Netzwerkverkehr die physikalische Adresse des ersten Netzwerkgeräts (120, 405A) umfasst und die physikalische Adresse der zweiten VM (103, 403B) nicht enthält.

9. Verfahren nach Anspruch 8, wobei
die im Netzwerkverkehr enthaltene physikalische Adresse des ersten Netzwerkgeräts (120, 405A) als physikalische Zieladresse des Netzwerkverkehrs festgelegt wird und
der Netzwerkverkehr eine Internetprotokolladresse (IP-Adresse) der zweiten VM (103, 403B) enthält, um die zweite VM (103, 403B) als Zieladresse des Netzwerkverkehrs zu identifizieren.

10. Verfahren nach Anspruch 8, wobei das Senden des Netzwerkverkehrs ferner umfasst:
Umschreiben (226) der physikalischen Adresse des ersten Netzwerkgeräts (120, 405A) im Netzwerkverkehr in eine physikalische Adresse des zweiten Netzwerkgeräts (120, 405B) beim Empfang des Netzwerkverkehrs von der ersten VM (103, 403A);
Kapseln (226) des Netzwerkverkehrs mit einem Tunnel-Header, um gekapselten Netzwerkverkehr zu erzeugen; und
Senden (228) des gekapselten Netzwerkverkehrs an das zweite Netzwerkgerät (120, 405B) auf der Grundlage der physikalischen Adresse des zweiten Netzwerkgeräts (120, 405B), die im Netzwerkverkehr enthalten ist.

11. Verfahren nach einem der Ansprüche 1 bis 9, ferner umfassend:
Empfangen (230) von gekapseltem Netzwerkverkehr von dem zweiten Netzwerkgerät (120, 405B);
Entkapseln (232) des gekapselten Netzwerkverkehrs, um entkapselten Netzwerkverkehr zu erhalten;
Feststellen (234), dass der entkapselte Netzwerkverkehr eine physikalische Adresse enthält, die mit einer physikalischen Adresse des ersten Netzwerkgeräts (120, 405A) übereinstimmt;
Initiieren (238) einer Weiterleitung des entkapselten Netzwerkverkehrs an die erste VM (103, 403A) unter Verwendung der physikalischen Adresse der ersten VM (103, 403A) auf der Grundlage der Feststellung.

12. Netzwerkgerät (105, 120, 405A, 600), umfassend:
Speicher und Arbeitsspeicher (604, 606);
einen oder mehrere Prozessoren (602), die zumindest teilweise auf der Grundlage des Speichers und des Arbeitsspeichers (604, 606) so konfiguriert sind, dass sie:
von einem zusätzlichen Netzwerkgerät (120, 405B) eine Routenerstellungsanforderung empfangen (210), die eine physikalische Adresse einer virtuellen Maschine (VM) (103, 403B) umfasst;
auf der Grundlage der empfangenen Routenerstellungsanforderung jegliche Einträge, die mit der physikalischen Adresse der VM (103, 403B) übereinstimmen, aus einer von dem Netzwerkgerät (120, 405A) gespeicherten Netzwerkadressentabelle (124, 407A) entfernen (212);
auf der Grundlage der empfangenen Routenerstellungsanforderung unter Verwendung einer physikalischen Adresse des zusätzlichen Netzwerkgeräts (120, 405B) eine Route für die VM (103, 403B) programmieren; und
auf der Grundlage der programmierten Route Netzwerkverkehr, der für die VM (103, 403B) bestimmt ist, an das zusätzliche Netzwerkgerät (120, 405B) übertragen, ohne die physikalische Adresse der VM (103, 403B) zu verwenden.

13. Netzwerkgerät nach Anspruch 12, wobei der eine oder die mehreren Prozessoren (602) dazu eingerichtet sind, den Netzwerkverkehr zu empfangen, wobei der empfangene Netzwerkverkehr eine Internetprotokoll-Adresse (IP-Adresse) der VM (103, 403B) und eine physikalische Adresse des Netzwerkgeräts (120, 405A) umfasst.

14. Netzwerkgerät nach Anspruch 12 oder Anspruch 13, wobei die Routenerstellungsanforderung eine Anforderung zum Erstellen einer Typ-2-Route zur VM (103, 403B) über das zusätzliche Netzwerkgerät (120, 405B) umfasst.

15. Netzwerkgerät nach einem der Ansprüche 12 bis 14, wobei die programmierte Route für die VM (103, 403B) unter Verwendung der physikalischen Adresse des zusätzlichen Netzwerkgeräts (120, 405B) eine /32-Internetprotokoll-Route (IP-Route) oder eine /128-IP-Route ist.

## Revendications

1. Procédé destiné à faciliter la mobilité d'une machine virtuelle (VM) entre des périphériques réseau (105, 120, 405) connectés à un réseau, ledit procédé étant mis en œuvre par un premier périphérique réseau (120, 405A) parmi les périphériques réseau (105, 120, 405) connecté à une première VM (103, 403A) s'exécutant sur un premier serveur, le procédé comprenant:
la réception (210) d'une demande de création de route, contenant une adresse physique de la deuxième VM, provenant d'un deuxième périphérique réseau (120, 405B) parmi les périphériques réseau (105, 120, 405), qui est connecté à la deuxième VM (103, 403B) s'exécutant sur un deuxième serveur;
en réponse à la réception de la demande de création de route:
supprimer (212) une ou plusieurs entrées correspondant à l'adresse physique de la deuxième VM (103, 403B) d'une table d'adresses réseau (124, 407A) stockée par le premier dispositif réseau (120, 405A); et
programmer (214) une route entre la première machine virtuelle (103, 403A) et la deuxième machine virtuelle (103, 403B) en utilisant une adresse physique du deuxième périphérique réseau (120, 405B); et
après avoir programmé la route, transmettre le trafic réseau depuis la première VM (103, 403A) vers le deuxième périphérique réseau (120, 405B) sans utiliser l'adresse physique de la deuxième VM (103, 403B).

2. Procédé selon la revendication 1, dans lequel le trafic réseau, lorsqu'il est reçu par la première VM (103, 403A), comprend une adresse de protocole internet (adresse IP) de la deuxième machine virtuelle (103, 403A) et une adresse physique du premier périphérique réseau (120, 405A).

3. Procédé selon la revendication 1 ou la revendication 2, dans lequel
la demande de création de route est une demande visant à créer une route de type 2 entre la première VM (103, 403A) et la deuxième VM (103, 403B) via le premier périphérique réseau (120, 405A) et le deuxième périphérique réseau (120, 405B), et
la route programmée à l'aide de l'adresse physique du deuxième périphérique réseau (120, 405B) entre la première VM (103, 403A) et la deuxième VM (103, 403B) est une route du protocole Internet IP /32 ou une route IP /128.

4. Procédé selon la revendication 3, dans lequel la demande de création de route est un message du Border Gateway Protocol (BGP) comprenant la route de type 2.

5. Procédé selon l'une quelconque des revendications précédentes, le procédé comprenant en outre:
la réception d'une mise à jour provenant d'un troisième dispositif réseau parmi les dispositifs réseau (105, 120, 405), indiquant que la première VM (103, 403A) est désormais connectée au troisième dispositif réseau à la place du premier dispositif réseau (120, 405A); et
en réponse à la réception de la mise à jour, la suppression d'une adresse physique de la première VM (103, 403A) de la table d'adresses réseau (124, 407A), sans ajouter par la suite l'adresse physique de la première VM (103, 403A) en tant qu'adresse distante dans la table d'adresses réseau (124, 407A).

6. Procédé selon l'une quelconque des revendications précédentes, dans lequel la transmission du trafic réseau depuis la première VM (103, 403A) vers le deuxième périphérique réseau (120, 405B), sans utiliser l'adresse physique de la deuxième VM (103, 403A) comprend le transfert du trafic réseau par le premier périphérique réseau (120, 405A) à l'aide d'un processus de routage plutôt que d'un processus de pontage.

7. Procédé selon la revendication 6, dans lequel le processus de routage est le Proxy Address Resolution Protocol (ARP).

8. Procédé selon l'une quelconque des revendications précédentes, dans lequel l'envoi du trafic réseau comprend:
l'interception (220) d'une requête de diffusion envoyée par la première VM (103, 403A);
en réponse à cette interception, l'envoi (222) d'une adresse physique du premier périphérique réseau (120, 405A) à la première machine virtuelle (103, 403A); et
en réponse à l'envoi de l'adresse physique du premier périphérique réseau (120, 405A) à la première MV (103, 403A), la réception du trafic réseau provenant de la première VM (103, 403A), ledit trafic réseau comprenant l'adresse physique du premier périphérique réseau (120, 405A) et ne contenant pas l'adresse physique de la deuxième VM (103, 403B).

9. Procédé selon la revendication 8, dans lequel
l'adresse physique du premier périphérique réseau (120, 405A) contenue dans le trafic réseau est définie comme adresse physique de destination du trafic réseau et
le trafic réseau contient une adresse de protocole Internet (adresse IP) de la deuxième VM (103, 403B) afin d'identifier la deuxième VM (103, 403B) en tant qu'adresse de destination du trafic réseau.

10. Procédé selon la revendication 8, dans lequel l'envoi du trafic réseau comprend en outre:
la réécriture (226) de l'adresse physique du premier périphérique réseau (120, 405A) dans le trafic réseau en une adresse physique du deuxième périphérique réseau (120, 405B) lors de la réception du trafic réseau provenant de la première machine virtuelle (103, 403A);
l'encapsulation (226) du trafic réseau avec un en-tête de tunnel afin de générer du trafic réseau encapsulé; et
l'envoi (228) du trafic réseau encapsulé au deuxième dispositif réseau (120, 405B) sur la base de l'adresse physique du deuxième dispositif réseau (120, 405B) contenue dans le trafic réseau.

11. Procédé selon l'une quelconque des revendications 1 à 9, comprenant en outre:
la réception (230) d'un trafic réseau encapsulé provenant du deuxième dispositif réseau (120, 405B);
décapsuler (232) le trafic réseau encapsulé afin d'obtenir du trafic réseau décapsulé;
déterminer (234) que le trafic réseau décapsulé contient une adresse physique qui correspond à une adresse physique du premier dispositif réseau (120, 405A);
lancer (238) un transfert du trafic réseau désencapsulé vers la première VM (103, 403A) en utilisant l'adresse physique de la première VM (103, 403A) sur la base de cette constatation.

12. Dispositif réseau (105, 120, 405A, 600) comprenant:
une mémoire et une mémoire vive (604, 606);
un ou plusieurs processeurs (602) configurés, au moins en partie sur la base de la mémoire et de la mémoire vive (604, 606), pour:
recevoir (210) d'un dispositif réseau supplémentaire (120, 405B) une demande de création de route comprenant une adresse physique d'une machine virtuelle (VM) (103, 403B);
sur la base de la demande de création de route reçue, supprimer (212) de la table d'adresses réseau (124, 407A) stockée par le dispositif réseau (120, 405A) toutes les entrées correspondant à l'adresse physique de la VM (103, 403B);
sur la base de la demande de création de route reçue, programmer une route pour la VM (103, 403B), en utilisant une adresse physique du dispositif réseau supplémentaire (120, 405B); et
sur la base de la route programmée, transmettre le trafic réseau destiné à la VM (103, 403B) vers le dispositif réseau supplémentaire (120, 405B) sans utiliser l'adresse physique de la VM (103, 403B).

13. Dispositif réseau selon la revendication 12, dans lequel le ou les processeurs (602) sont agencés pour recevoir le trafic réseau, le trafic réseau reçu comprenant une adresse de protocole Internet (adresse IP) de la VM (103, 403B) et une adresse physique du dispositif réseau (120, 405A).

14. Dispositif réseau selon la revendication 12 ou la revendication 13, dans lequel la demande de création de route comprend une demande de création d'une route de type 2 vers la VM (103, 403B) via le dispositif réseau supplémentaire (120, 405B).

15. Dispositif réseau selon l'une quelconque des revendications 12 à 14, dans lequel la route programmée pour la VM (103, 403B), utilisant l'adresse physique du dispositif réseau supplémentaire (120, 405B), est une route IP /32 ou une route IP /128.
